# EUROPEAN PATENT APPLICATION

(11) **EP 4 714 248 A1**
(43) Date of publication of application: **25.03.2026**
(21) Application number: 24201018.9
(22) Date of filing: 18.09.2024
(51) Int. Cl.: A01D 41/127, A01D 43/08

(54) **A MONITORING ARRANGEMENT FOR AN AGRICULTURAL IMPLEMENT**

(71) Applicant: CNH Industrial Belgium N.V., 8210 Zedelgem (BE)
(72) Inventor: Passchyn, Tim, 8210 Zedelgem (BE); Vanlerberghe, Jasper, 8210 Zedelgem (BE)
(74) Representative: CNH Industrial IP Department

(57) **Abstract**

The implement, for example a combine harvester, comprises at least one walled compartment (1) with a monitoring aperture (21) in one of the walls of the compartment. A door (6) is configured to cover or uncover the aperture, the door comprising a light-sensitive sensing device, so as to be able to detect light originating from the interior of the compartment when the door is closed. The sensing device may for example be a camera mounted in a camera housing (6) that hinges about a hinge axis (10) to enable the camera housing to cover or uncover the aperture (21). A control unit (7) is furthermore provided, configured to receive a signal from the sensing device and to derive from said signal an indication regarding the position of the door (6) relative to the aperture (21). The door is preferably provided with a locking mechanism (11) configured so that the signals obtained from the sensing device enable the control unit (7) to derive whether the door is locked by the locking mechanism.

## Description

### Field of the invention

The present invention is related to agricultural machinery, in particular to large implements such as combine harvesters and forage harvesters.

### State of the art.

Combine or forage harvesters are large and technically complex machines comprising multiple moving components operating in confined compartments, many of which are difficult to access. Regular inspection and monitoring of such components is enabled by window-type apertures closed off by hinged hatch doors or similar closures. It is known to incorporate monitoring cameras in such doors, for monitoring an interior portion of a compartment at regular intervals.

### Summary of the invention

The invention is related to an agricultural implement in accordance with the appended claims. The implement, for example a combine harvester, comprises at least one walled compartment with an aperture, for example for inspection, monitoring and/or cleaning, in a wall of the compartment. The compartment may have walls on all sides so that it is shielded from the exterior of the compartment, but it may also be open to the exterior at one or more sides.

A door is configured to cover or uncover the aperture, the door comprising a light-sensitive sensing device, so as to be able to detect light originating from the interior of the compartment when the door is closed. The sensing device may for example be a camera mounted in a camera housing that hinges about a hinge axis to enable the camera housing to cover or uncover the aperture. A control unit is furthermore provided, configured to receive a signal from the sensing device and to derive from said signal an indication regarding the position of the door relative to the aperture. The indication can be a classification like for example "close", "not completely closed", "open", or an opening angle or range of the opening angle of the door, like for example "0°", ">0° and <5°", ">5° and < 30°", ">30°". The invention thereby enables monitoring whether the door is covering the aperture. The door is preferably provided with a locking mechanism configured so that the signals obtained from the sensing device enable the control unit to derive whether the door is locked by the locking mechanism. Said signals could be light intensity signals indicative of ambient light (daylight and/or artificial light) originating outside the compartment and falling on the light sensitive device. Other embodiments are based on the processing of camera images and on the position within said images of one or more reference features on an imaged interior portion of the compartment.

The invention thereby enables monitoring the open or closed, and preferably the locked or unlocked condition of the door, and allows safety procedures to be put in place based on said monitoring function.

According to preferred embodiments, the compartment has a crop inlet and a crop outlet wherein crop is moved from the inlet of the compartment to the outlet, possibly with the crop being processed between the inlet and the outlet (as is the case in the chopper compartment). Especially for this type of compartments provided with an aperture for inspection and/or cleaning, the invention realises an increased degree of safety against the aperture being left uncovered and unlocked, thereby reducing the risk of injuries of persons accessing the aperture when processing tools are active, as well as reducing crop loss through the open apertures.

### Brief description of the figures

Figure 1 shows a chopper compartment of a combine harvester equipped with a monitoring camera housing in accordance with an embodiment of the invention.
Figure 2 is a close-up view of the monitoring camera housing attached to the chopper housing shown in Figure 1.
Figure 3 shows the camera housing in an open condition, revealing a monitoring aperture in the wall of the chopper housing.
Figure 4 shows the camera housing pivoted towards the chopper housing wall, prior to locking the camera housing.
Figure 5 shows an example of a field of view of the camera including a number of reference features indicative of the position of the camera-door.

### Detailed description of preferred embodiments of the invention

Preferred embodiments will now be described with reference to the drawings. The detailed description is not limiting the scope of the invention, which is defined only by the appended claims.

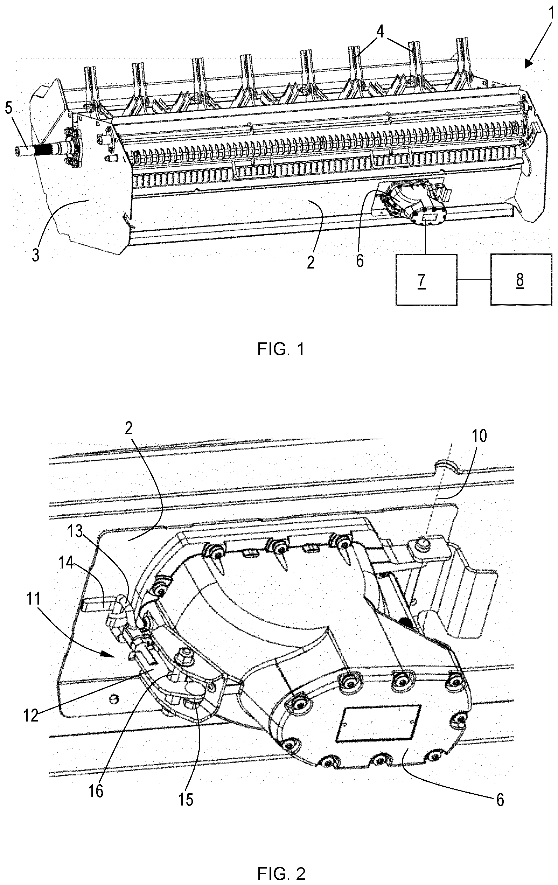

Figure 1 illustrates a chopper compartment 1, hereafter also abbreviated as 'chopper', of a combine harvester. The chopper is located at the rear of the combine and is configured to receive crop residue from the threshing and cleaning sections of the harvester. From the chopper, chopped residue particles are delivered to a spreader configured to eject the particles in an area behind the advancing combine.

The chopper 1 comprises a housing having front and rear walls and planar sidewalls. The rear wall 2 and left-hand sidewall 3 are indicated in the drawing. Chopper knives 4 are coupled to a central axle 5 that is rotatable within the chopper housing. The knives 4 are configured to chop the crop material against counterknives (not shown) which are stationary relative to the housing. Crop enters at the top of the compartment between the front and rear walls and chopped crop material exits at the bottom. This chopper configuration is known as such and no further detailed description is therefore included here.

It is seen that the chopper 1 further comprises a camera housing 6 mounted against the rear housing wall 2. Figure 2 shows a close-up view of the camera housing 6, which contains a camera of a type and dimensions known for use as a monitoring device in agricultural machinery. The camera is configured to capture images of the interior of the chopper compartment during operation of the harvester. To this aim, an aperture is provided in the rear wall 2 and the camera housing 6 is mounted onto said aperture, thereby effectively closing off the aperture. The camera housing 6 is in fact configured to act as a hinged door capable of covering or uncovering the aperture by rotation about a hinge axis 10. The camera housing 6 will hereafter also be referred to as the 'camera-door' 6, due to the housing's double function of acting as a camera enclosure and as a hinged door. A power supply cable (not shown) may be attached to or integrated in the chopper housing for supplying power to the camera.

The camera is connected by a cable, possibly packaged together with the supply cable, or by a wireless connection, to a control unit 7, represented symbolically by the square 7 in Figure 1. This is a signal processing unit, configured to receive signals from the camera, said signals being representative of images captured by the camera. The control unit 7 may be integrated in a harvester control unit programmed and configured to perform known control and monitoring functions of various kinds. In addition to such known functions, the control unit 7 in a harvester according to the invention is configured to perform a specific monitoring function which will be described hereafter. The control unit 7 may also be implemented separately from a standard harvester control unit. The control unit 7 is preferably coupled to a monitor 8, which may for example be part of a user interface arranged in the operator's cabin of the harvester, and configured to communicate data related to or derived from the captured images to an operator seated in the cabin.

As seen in Figure 2, the camera-door 6 is locked by a locking mechanism 11. In the embodiment shown, this is an overcenter mechanism 11, the principle of which is known as such, but any other locking mechanism may be applied. The overcenter mechanism 11 comprises an overcenter arm 12 provided with an attachment loop 13 at one end. The loop 13 is configured to engage with a hook-shaped anchor feature 14 on the wall 2. At the other end, the overcenter arm 12 is pivotably coupled to a lever 15 fixed to a rod 16 that is pivotable relative to the camera-door 6. Locking the mechanism requires engaging the loop 13 with the hook-shaped anchor feature 14 and pivoting the rod 16, thereby bringing the lever 15 and the overcenter arm 12 into the locked overcenter position illustrated in Figure 2. In the embodiment shown, the mechanism is dimensioned so that locking and unlocking is possible only by pivoting the rod 16 with the help of a gripping tool such as a wrench. As stated however, various other locking mechanisms are applicable in the context of the present invention.

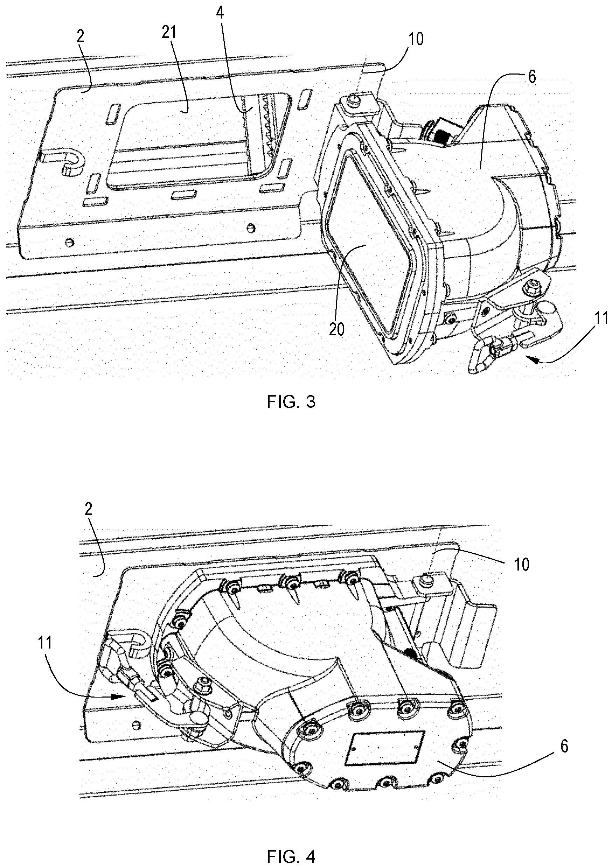

As seen in Figure 3, which shows the camera-door 6 fully opened by being swung back about pivot axis 10, the camera-door 6 comprises a front window 20 that fits onto the aperture 21 in the wall 2 when the door 6 is closed. One of the chopper knives 4 is visible in this drawing, appearing through the aperture 21. Opening the camera-door 6 is required regularly for cleaning the window 20 or during maintenance or repairs. Figure 4 shows the door 6 after it has been swung towards the aperture 21 and before securing and locking the overcenter mechanism 11. From a safety standpoint, it is important that the camera-door 6 is closed when the chopper is operational, i.e. during operational harvesting modes of the combine.

According to the illustrated embodiment, the camera included in the camera housing is used as a sensor configured to verify whether the camera-door 6 is effectively closed and locked.

In the particular case of a chopper compartment of a combine harvester, this compartment is essentially closed off from ambient light when the combine is operating in the field. In other words, the interior of the chopper compartment is essentially dark, whether the combine is operating under daylight conditions or under conditions of artificial ambient light during nighttime operation or under conditions where both daylight and artificial light are applied. The term 'essentially dark' covers compartments in which no or very little light is able to penetrate, as well as compartments in which light penetration is generally prohibited except momentarily, for example through a crop intake or outlet opening of the compartment, when the crop flow is momentarily low or zero. The monitoring camera is therefore equipped with one or more flashlights which illuminate the interior at every exposure of the camera, thereby enabling to obtain images of the otherwise dark interior. Alternatively, flashlights could be installed in the vicinity of the camera and separate from the camera, but coupled thereto in order to synchronize the lights with the camera operation. The images can be fed to an image processing unit or shown on a digital screen in the operator's cabin.

The overcenter mechanism 11 (or any equivalent mechanism) is configured to press the camera-door 6 against the wall 2, essentially obstructing any entry of light from outside the chopper compartment through the aperture 21. When the overcenter mechanism 11 is not locked, for example when the camera-door 6 is wide open as in Figure 3, or placed loosely against the wall as in Figure 4, and in any other position between these two positions, ambient light, i.e. light which does not originate from the interior of the compartment, is able to fall onto the camera window 20,.

In the illustrated embodiment, the camera's sensitivity is such that the ambient light is detectable by the camera without activating the flashlights, unless the overcenter mechanism 11 is secured and locked. In other words, the camera is able to detect a level of light intensity that is indicative of the position of the camera-door 6, and of whether or not the door is locked by the locking mechanism 11.

The control unit 7 is configured to monitor the light intensity detected by the camera based on images acquired from the camera without activating the flashlights. This configuration thereby enables the use of the camera as a sensor for checking whether the camera-door 6 is effectively closed and locked.

This use of the camera can be realized in the form of a number of safety procedures which can be put in place. For example, when the operator starts the combine, an automatic verification sequence may be performed prior to actually starting the working components of the machine, including in the illustrated embodiment, the chopper. The sequence may be as follows :
- the control unit 7 orders the camera to take a picture without using the flashlights,
- the control unit 7 receives the captured image,
- the control unit 7 verifies an average light intensity of the captured image. This is not necessarily the average light intensity of the complete image. The average could be determined of the intensity of a portion of the image, for example a portion that is more likely to be influenced by incoming light.
   ∘ if the average light intensity exceeds a predefined threshold, the control unit 7 concludes that the camera-door 6 is not locked and a warning signal is given to the operator through the monitor 8. Starting of the machine components is prohibited. The operator is then able to check the camera door 6, lock the door and return to the cabin for starting the machine components.
   ∘ If the average light intensity does not exceed the threshold, it is concluded that the camera-door 6 is effectively locked and the operation of the machine components can be started. The threshold can be zero light intensity in the case of a fully darkened compartment as in the chopper compartment. The threshold could also be somewhat higher if the compartment is not completely closed off from ambient light.

It is also possible to acquire images from the camera at regular intervals during operation of the harvester, without activating the flashlights, and verifying the average light intensity of the acquired images. This enables regular monitoring of the position and locking of the camera-door 6 during harvesting.

The embodiments based on light intensity measurements are not limited to embodiments wherein a locking mechanism is provided that effectively closes off the aperture from ambient light, although from a safety standpoint such embodiments are preferable. The invention is however applicable also to embodiments wherein the door covers the aperture without an actual locking mechanism and either with or without fully closing off the aperture from ambient light. The light intensity measurement can then still be used by the control unit 7 to derive information regarding the position of the door from the light intensity measurement, for example by detecting a higher intensity when the door is not covering the aperture compared to when the door is covering the aperture.

Another set of embodiments applicable to similar camera-configurations are not based on the measurement of light intensity, but rather on the characteristics of the images as such. In this case, and when applied to a compartment that is closed off from ambient light when the door is closed, the flashlights are not deactivated when taking verification images, but the images as such are processed in a verification algorithm. This requires the presence of one or more distinctive reference features appearing within the field of view of the camera when the camera-door 6 covers the aperture. Reference features may be used which are derivable from intrinsic constructional features within the monitored compartment. For example, if one of the chopper knives is visible to the camera, the position of the knife within the field of view of the camera can indicate the position of the camera-door. In addition or alternatively, specific reference features may deliberately be applied in said compartment, within the field of view of the camera, for example a pattern of bolts may be attached to a wall of the compartment. The position of the reference features within the captured image is fixed as a reference when the camera-door covers the aperture. If the camera-door is open or ajar, the reference features are either absent from the captured image, or shifted with respect to the reference. Detecting such an absence or shift is possible using standard image processing techniques.

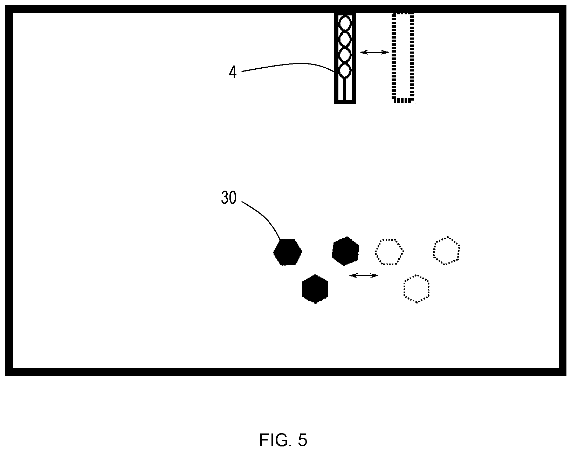

Figure 5 shows an example of a field of view of the camera including a set of deliberately applied reference features in the form of three bolts 30 attached in a triangular pattern to the back wall of the chopper. The detected position of the bolts will shift to the right, as indicated by the bolt pattern represented in dotted lines, if the camera-door is not closed. In addition or alternatively, the position of a chopper knife 4 can be used as a reference feature, shifting also to the right when the door is not closed.

Embodiments of this type are preferably applied in combination with a locking mechanism configured so that the door cannot fully cover the aperture unless the door is locked by said mechanism. In that case any shift of the reference features indicates that the door is open and unlocked. Furthermore, embodiments of this type are applicable in compartments which are not shielded from the exterior when the door is closed, and wherein sufficient light (daylight and/or artificial) falls onto the reference features. In this case a camera with flashlights is not needed. In practice however, to get the best results it is preferred to use flashlights with the acquisition of the camera image.

Such embodiments thereby enable another verification sequence, to be performed for example prior to starting the combine and/or regularly during operation of the combine. For example, a sequence performed prior to starting the combine could be as follows :
- the control unit 7 orders the camera to take a picture using the flashlights,
- the control unit 7 receives the captured image,
- the control unit 7 processes the captured image, and verifies the position of one or more predefined reference features.
   ∘ if the one or more reference features are not in a predefined position within the image, the control unit 7 concludes that the camera-door 6 is not covering the aperture and a warning signal is given to the operator. Starting of the engine is prohibited. The operator is then able to check the camera door, lock the door and return to the cabin for starting the operation of the machine components.
   ∘ If the one or more reference features are in the predefined position, it is concluded that the camera-door is effectively covering and locking the aperture and the machine components are started.

According to some embodiments wherein images captured by the camera are processed and checked with regard to the position of reference features, the control unit is programmed on the basis of a machine learning algorithm configured to process the images and thereby enable an AI (Artificial Intelligence) based assessment of captured images.

The invention is not limited to embodiments including a camera. The above-described verification sequence wherein the light intensity as such is verified can be performed with any light-sensitive sensor, i.e. not necessarily a camera. A light sensor can be used, configured to detect a light intensity level without capturing an image of the interior of the compartment. The light sensor may be a standard light sensor or a more advanced sensor such as an NIR sensor (Near Infra Red), applied for detecting the composition of crops detected by the sensor.

The invention is applicable to the monitoring of the position of any door provided in a walled compartment of an agricultural implement, i.e. it is not limited to the illustrated application on the chopper compartment of a combine harvester. In a combine harvester, several similar camera-doors may be present and the invention can be applied to one or more of these doors, including for example a monitoring camera or NIR sensor mounted on a door used for cleaning and/or inspection in a sidewall of the clean grain elevator housing or of an auger housing. The invention is applicable also to walled compartments of other types of agricultural machinery, such as forage harvesters, sugar cane harvesters or balers. Particular embodiments include for example :
- A door equipped with an NIR sensor on the sidewall of the spout of a forage harvester, i.e. the spout through which processed crops are ejected from the harvester.
- A door equipped with an NIR sensor on the crop intake compartment of a baler,
- A door equipped with a camera or NIR sensor in a sidewall of the chopper compartment of a sugar cane harvester.

The invention is not limited to the application on hinged doors, but can also be applied to doors or hatches configured to close or open in other ways, such as by sliding in front of a monitored aperture.

## Claims

1. An agricultural implement comprising a compartment (1) fully or partially enclosed by walls (2,3) and a door (6) configured to cover or uncover an aperture (21) in one of said walls, wherein the door (6) comprises a transparent window (20) and a light-sensitive sensing device configured to capture light falling through the window and originating from an interior portion of the compartment (1) when the door covers the aperture (21), **characterized in that** the implement further comprises a control unit (7) configured to receive a signal from the sensing device, and to derive from said signal an indication regarding the position of the door (6) relative to the aperture (21).

2. The agricultural implement according to claim 1, wherein the compartment (1) has a crop inlet and a crop outlet wherein crop is moved from the inlet of the compartment to the outlet, possibly with the crop being processed between the inlet and the outlet.

3. The agricultural implement according to claim 1 or 2, wherein:
- the interior of the compartment (1) is essentially dark when the implement is in operation with the door (6) covering the aperture (21), and when the exterior of the compartment is illuminated by daylight and/or by an artificial light source,
- the light-sensitive device is a camera comprising or coupled to one or more flashlights for making images of said interior portion with the help of said flashlights when the door (6) is covering the aperture (21),
- the control unit (7) is configured to derive said indication on the basis of a signal received from the camera, said signal being representative of the intensity of light captured by the camera when the flashlights are not active.

4. The agricultural implement according to claim 3 , wherein the door (6) is provided with a locking mechanism (11) configured to lock the door when the door is covering the aperture (21), and wherein the locking mechanism is configured so that the door cannot fully shield the aperture from light originating outside the compartment, unless the door is locked by said mechanism (11).

5. The agricultural implement according to claim 1 or 2, wherein:
- the light-sensitive device is a camera configured to produce images of said interior portion of the compartment (1),
- said interior portion is provided with one or more reference features appearing in a predefined position in said images when the door is covering the aperture (21),
- the control unit (7) is configured to derive said indication on the basis of images captured by the camera and on the verification of whether or not said one or more reference features are in said predefined position.

6. The agricultural implement according to claim 5, wherein the door (6) is provided with a locking mechanism (11) configured to lock the door when the door is covering the aperture (21), and wherein the locking mechanism is configured so that the door cannot fully cover the aperture unless the door is locked by said mechanism.

7. The agricultural implement according to claim 5 or 6, wherein the control unit (7) is programmed on the basis of a machine learning algorithm configured to process images captured by the camera.

8. The agricultural implement according to claim 4 or 6 wherein the locking mechanism is an overcenter mechanism (11).

9. The agricultural implement according to any one of the preceding claims, wherein the door (6) is a hinged door configured to cover or uncover said aperture (21) by rotating about a hinge axis (10) located adjacent the aperture.

10. The agricultural implement according to any one of the preceding claims, wherein the control unit (7) is further configured to communicate data regarding the position of the door (6) to a monitor (8) comprised in the agricultural implement.

11. The agricultural implement according to any one of the preceding claims, wherein the implement is a combine harvester comprising :
- a chopper and spreader arrangement comprising a chopper compartment (1),
- a clean grain elevator comprising a housing that forms a compartment,
- one or more clean grain augers comprising a housing that forms a compartment,
and wherein the compartment comprising said door and aperture is or more of the following :
- the chopper compartment,
- the housing of the clean grain elevator,
- the housing of one or more of the clean grain augers.

12. The agricultural implement according to any one of claims 1 to 10, wherein the implement is a sugar cane harvester comprising a walled chopper compartment, and wherein the compartment comprising said door and aperture is said chopper compartment of the sugar cane harvester.

13. The agricultural implement according to any one of claims 1 to 10, wherein the implement is a forage harvester comprising a spout for ejecting processed crops from the harvester, the spout forming a walled compartment, and wherein the compartment comprising said door and aperture is the spout of the forage harvester.

14. The agricultural implement according to any one of claims 1 to 10, wherein the implement is a baler comprising a walled crop intake compartment, and wherein the compartment comprising said door and aperture is the crop intake compartment of the baler.

15. A method for checking the position of said door (6) in an implement according to claim 4, the method comprising the following steps :
- the control unit (7) orders the camera to take a picture without using the flashlights,
- the control unit receives the captured image,
- the control unit verifies the average light intensity of at least part of the captured image,
∘ if the average light intensity exceeds a predefined threshold, the control unit (7) concludes that the door (6) is not locked and a warning signal is given to an operator of the implement.
∘ if the average light intensity does not exceed the threshold, it is concluded that the door (6) is effectively locked.

16. A method for checking the position of said door (6) in an implement according to claim 6, the method comprising the following steps :
- the control unit (7) orders the camera to take a picture,
- the control unit receives the captured image,
- the control unit processes the captured image, and verifies the position of one or more reference features,
∘ if the one or more reference features are not in a predefined position within the image, the control unit (7) concludes that the door (6) is not locked and a warning signal is given to an operator of the implement,
∘ if the one or more reference features are in the predefined position, it is concluded that the door is effectively locked.
